# EUROPEAN PATENT APPLICATION

(11) **EP 1 077 401 A2**
(43) Date of publication of application: **21.02.2001**
(21) Application number: 00117737.7
(22) Date of filing: 17.08.2000
(51) Int. Cl.: G06F 3/12

(54) **Print control apparatus and storage medium**

(30) Priority: 19.08.1999 JP 23285899
(71) Applicant: Casio Computer Co., Ltd., Shibuya-ku, Tokyo (JP)
(72) Inventor: Tutumi, Katsunori, c/o Casio Computer Co., Ltd., Hamura-shi, Tokyo 205-8555 (JP); Watanabe, Takayasu, c/o Casio Computer Co., Ltd., Hamura-shi, Tokyo 205-8555 (JP); Tamura, Kouji, c/o Casio Computer Co., Ltd., Hamura-shi, Tokyo 205-8555 (JP); Hatano, Eiji, c/o Casio Computer Co., Ltd., Hamura-shi, Tokyo 205-8555 (JP); Tsurumi, Makoato, c/o Casio Computer Co., Ltd., Hamura-shi, Tokyo 205-8555 (JP); Fukumoto, Naoki, c/o Casio Computer Co., Ltd., Hamura-shi, Tokyo 205-8555 (JP)
(74) Representative: Grünecker, Kinkeldey, Stockmair & Schwanhäusser Anwaltssozietät

(57) **Abstract**

When a print processing is interrupted by a generation of an error, a host device recognizes an interrupted print request job and its non-printed page in print data transmitted to a printer, and switches form the printer having an error to another printer so as to start print from the non-printed page of the interrupted print request job. In order to achieve this, a print output status of print data transmitted to the printer is managed for each of the print request jobs, and then, based on the print output status acquired from the printer, a print output status of print data managed for each of the print request jobs is updated. When the print processing is interrupted by a generation of an error, based on the print output status of print data managed for each of the print request jobs, a print request job having an interrupted print output and an interrupted page are detected, and then, print data from the interrupted page of the print request job having an interrupted print output is again transmitted to another printer having no error status.

## Description

The present invention relates to a print control apparatus which can perform a printer change-over control in accordance with various situations in the case of printing a plurality of print jobs by using a plurality of printers, and to a storage medium which stores a control program of the print control apparatus.

In recent years, a printer having a so-called buffering function has come into wide use. In this case, a received print request data with plural pages is temporarily stored in a buffer, and thereafter, printing is carried out every one page in succession while data is being fetched from the buffer. A printer having a large buffer capacity can perform printing at a higher speed. For example, the above printer having a buffering function is connected to a LAN (Local Area Network), and is used in common to plural users. In the case where many users intensively make a print request job, in order to disperse a printer load and to reduce a print wait time, there are many cases where a plurality of printers are connected on a LAN. These printers are previously classified into some groups, and then, in the case where a print error such as no paper or the like is generated in a certain printer of one group during printing, the printer having a print error is automatically switched to another printer of the same group so as to perform print, a so-called relay printing function has been used.

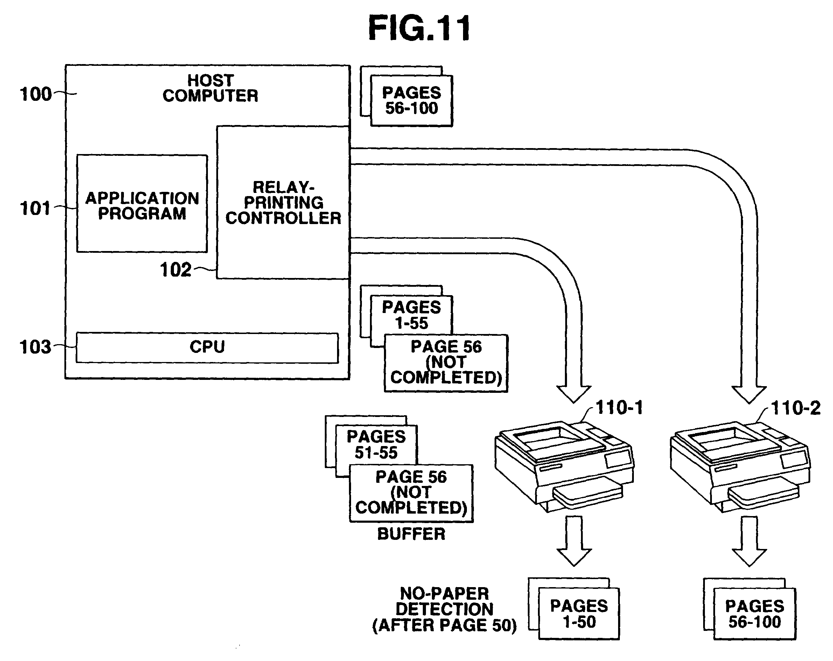

A relay printing operation using the relay printing function will be described with reference to a conventional system configuration shown in FIG. 11.

In FIG. 11, two printers, that is, a printer 110-1 and a printer 110-2 are classified into the same group, and a paper is set by 50 sheets in the printer 110-1. Both printer 110-1 and printer 110-2 are a page printer, and have a buffer storing print request data with several pages.

Further, in FIG. 11, a higher level application program 101 operating on a host computer 100 outputs 100-page print data to a relay-printing controller 102. The relay-printing controller 102 finds an available printer (in this case, printer 110-1) out of the grouped printers, and then, outputs print data to the printer 110-1.

Only 50 sheets of papers are set in the printer 110-1; therefore, a no-paper error is generated at the point of time when 50 sheets of prints are ejected. In this case, pages 51 to 55 print data have been already transmitted to the buffer included in the printer 110-1 from the relay-printing controller 102. Thus, in the relay-printing controller 102, an error of the printer 110-1 is detected in the middle of transmitting page 56 print data.

After an error of the printer 110-1 is detected, the relay-printing controller 102 detects another available printer 110-2 from the grouped printers, and then, switches from the printer 110-1 to the printer 110-2 so as to transmit print data with page 56 detected as an error to page 100, and thus, continues a print operation.

However, in such a case, when turning off a power because an error of the printer 110-1 is not recovered, the print data with page 51 to page 55 is lost as it is not printed and output.

Meanwhile, there has been known a technique of recognizing an output status of print data buffered in a printer in accordance with a request from the host computer. Usually, a printer side has no intelligent function of managing an output status of print data every print jobs. For this reason, in the case where a print output of all page data included in one print request job is completed, and thereafter, the next print request job data is transmitted to a printer, even if an output break by an error takes place, it is possible to specify a print output incomplete page position. However, in the case of continuously transmitting a plurality of print job data to a printer, an output status of print data is not managed every print jobs; for this reason, it is impossible to specify a print output incomplete page position when print processing is broken.

Accordingly, it is an object of the present invention to provide a print control apparatus which can change over from one printer to another printer in the case where an error such as no paper or the like is generated in any of a plurality of printers printing a plurality of print jobs, and can start a print from a still no-printed page of an interrupted print job.

In particular, in the case where a plurality of users continuously handle a plurality of print jobs, even if a print job is output to a printer having no intelligent function of managing an output status of print data every print jobs, it is possible to switch and print the plurality of print jobs without reducing a print efficiency.

According to a first aspect of the present invention, a print control apparatus which carries out an output control of print data with respect to a plurality of printers, comprises transmission means for transmitting print data of plural pages included in a plurality of print request jobs requested by a user to at least one of the plurality of printers, and for managing a print output status of the transmitted print data for each of the plurality print request jobs; updating means for acquiring a print output status of the printer, and for updating the print output status of the transmitted print data managed for each of the print request jobs based on the print output status of the printer; detecting means for detecting a print request job having an interrupted print output and an interrupted page based on the print output status of the transmitted print data managed for each of the print request jobs when a printing operation of one of the plurality of printers is interrupted by a generation of an error; and restart means for again transmitting print data from the interrupted page of the print request job having the interrupted print output to a printer having no error.

Therefore, even if the printer has no intelligent function of managing a print status every print jobs, for example, only by simply acquiring the number of non-printed pages buffered in the printer, it is possible to specify a print request job having an interrupted print output in the plurality of print jobs transmitted to the printer and an interrupted page. Further, even in the case of processing continuously plural print request jobs from a plurality of users, it is possible to continuously transmit page data of the plurality of print request jobs to the printer without waiting a print output completion every one print request job processing. Furthermore, in the case where a power off, reset and the like are carried out with respect to the printer when print is interrupted by an error and the like, it is possible to restart print by transmitting data from a correct page position of the interrupted print request job without generating a print page skip; therefore, availability and reliability can be improved in a print system.

According to a second aspect of the present invention, a print control apparatus which carries out an output control of print data output with respect to a plurality of printers connected to a network, the apparatus comprises transmission means for transmitting print data of plural pages included in a plurality of print request jobs requested by a user to at least one of the plurality of printers; detecting means for detecting a print request job having an interrupted print output and an interrupted page in the print request job of print data transmitted to the printer when a printing operation of the printer is interrupted by a generation of an error; and restart means for selecting another printer which is connected to the network and has no error, and for again transmitting print data from the interrupted page of the print request job having the interrupted print output to the selected other printer.

Therefore, in the case of processing a continuously plural print request jobs from a plurality of users, it is possible to continuously transmit page data of the plurality of print request jobs to the printer without waiting a print output completion every one print request job processing. Further, in the case where print is interrupted by an error and the like, it is possible to restart print by transmitting data from a correct page position of the interrupted print request job to another printer having no error on a network without generating a print page skip; therefore, availability and reliability can be improved in a print system.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram showing a configuration of principal parts of a host computer 1 in an embodiment of a print system according to the present invention;
FIG. 2 is a diagram showing a functional block for a print control function of the host computer 1 of FIG. 1, and showing a configuration of N printers connected to the functional block;
FIG. 3 is a diagram showing configuration of a spool job description file and a drawing information storage file shown in FIG. 2;
FIG. 4 is a diagram showing a configuration of a relay-printing control file 204 shown in FIG. 2;
FIG. 5A to FIG. 5C are diagrams showing a storage process of a complete paper-eject management table for a printer 201-1 according to a first spool job shown in FIG. 2;
FIG. 6A to FIG. 6C are diagrams showing a storage process of a complete paper-eject management table for a printer 201-1 according to a first spool job and a second spool job shown in FIG. 2;
FIG. 7A and FIG. 7B are diagrams showing a storage process of a complete paper-eject management table for a printer 201-2 according to the first and second spool jobs shown in FIG. 2 when a printer error is generated;
FIG. 8A and FIG. 8B are flowcharts showing a part of print control processing carried out by a CPU 2 shown in FIG. 1;
FIG. 9 is a flowchart showing a complete paper-eject management table updating processing carried out by the CPU 2 shown in FIG. 1;
FIG. 10 is a flowchart showing a relay-printing processing carried out by the CPU 2 shown in FIG. 1; and
FIG. 11 is a diagram to explain a process when a printer error is generated in a conventional print system.

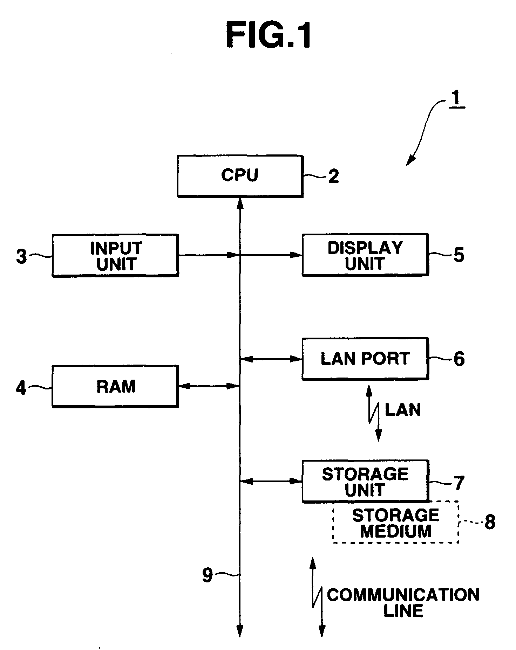

FIG. 1 to FIG. 10 are diagrams showing one embodiment of a print system employing the present invention in which a host computer and a plurality of printers are connected by the LAN.

A configuration of the above print system will be described below.

FIG. 1 is a block diagram showing a configuration of principal parts of the host computer 1 in this embodiment. The host computer 1 comprises a CPU (Central Processing Unit) 2, an input unit 3, a RAM (Random Access Memory) 4, a display unit 5, a LAN port 6, a storage unit 7 and a storage medium 8. Each unit excluding the storage unit 8 is connected to a bus line 9.

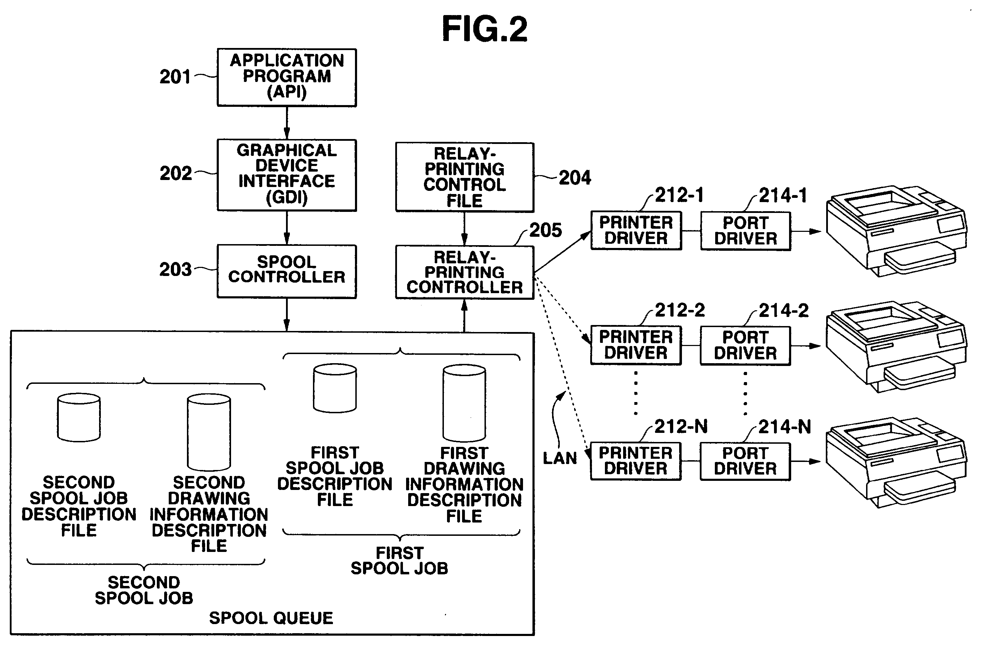

The host computer 1 has a print control function as shown in the functional block of FIG. 2 with respect to N printers having a built-in buffer connected via the LAN as shown in FIG. 2.

More specifically, the host computer 1 has the following elements as the print control function, that is, an application program (API) 201 having a document print processing function, a graphical device interface (GDI) 202 for data-structuring drawing information input from the application program 201, a spool controller 203 for generating a spool job description file and a drawing information description file from the drawing information data-structured by the graphical device interface 202, a relay-printing controller 205 for carrying out a relay-printing control based on print interrupted spool job description file and drawing information description file, with respect to a relay target printer described in a relay-printing control file 204 when a fault is generated in a printer.

In FIG. 2, printer drivers 212-1 to 212-N and port drivers 214-1 to 214-N connected to the printers 210-1 to 210-N are shown as a functional block belonging to a LAN port (not shown) for transmitting and receiving various control signals relative to the print control processing via the LAN between each of the printers 212-1 to 212-N and the host computer 1. These printer drivers 212-1 to 212-N and port drivers 214-1 to 214-N are built in the printers 210-1 to 210-N, respectively. These functional blocks may be included in the host computer 1 side.

In the host computer 1, first and second spool job description files and first and second drawing information description files are individually generated in pairs by a one-time application print processing. A file combining these two files, that is, the spool job description file and the drawing information description file, is called as a spool job file. An ID for specifying the spool job file is called as a spool job ID. In FIG. 2, a spool queue shows a queue until the spool job file is output to a printer. In accordance with an application print processing request, the spool job file is stored in the RAM 4 by the CPU 2.

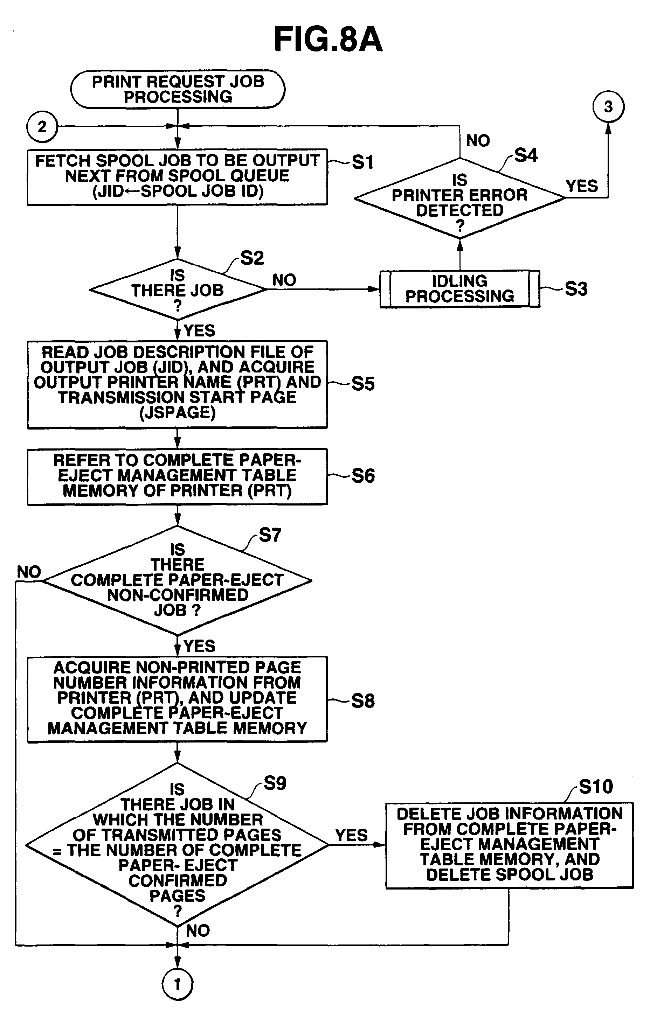

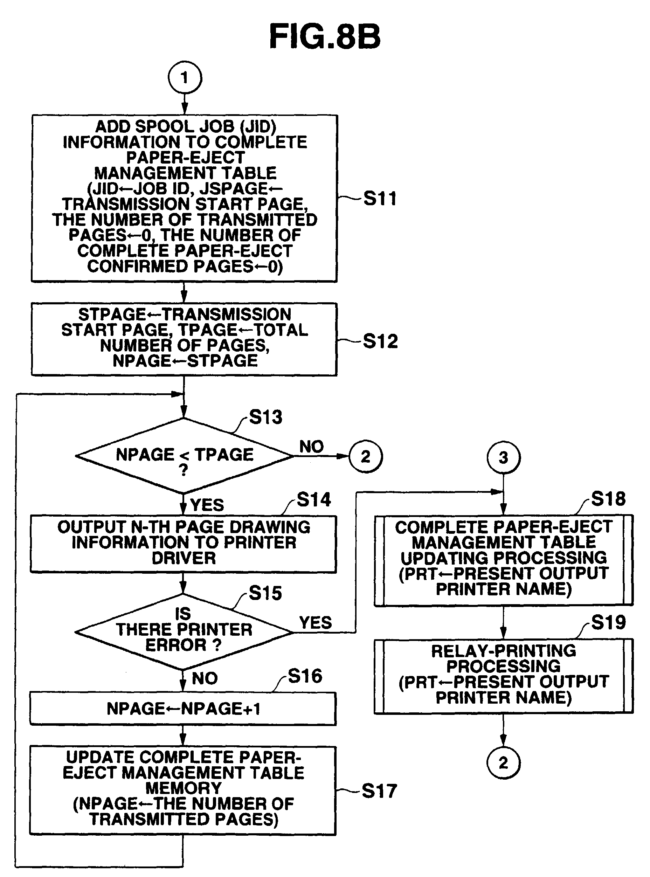

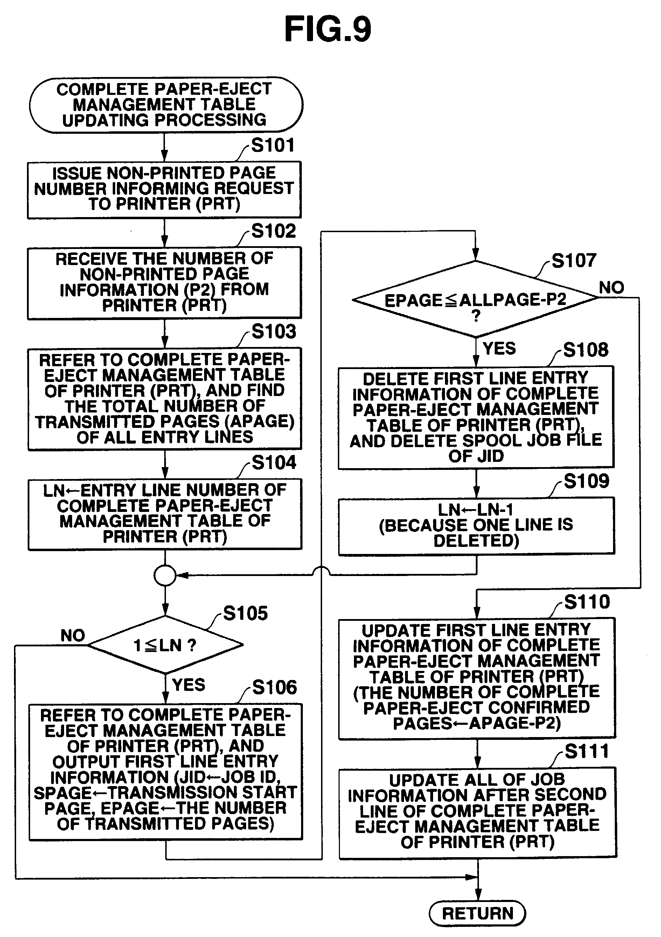

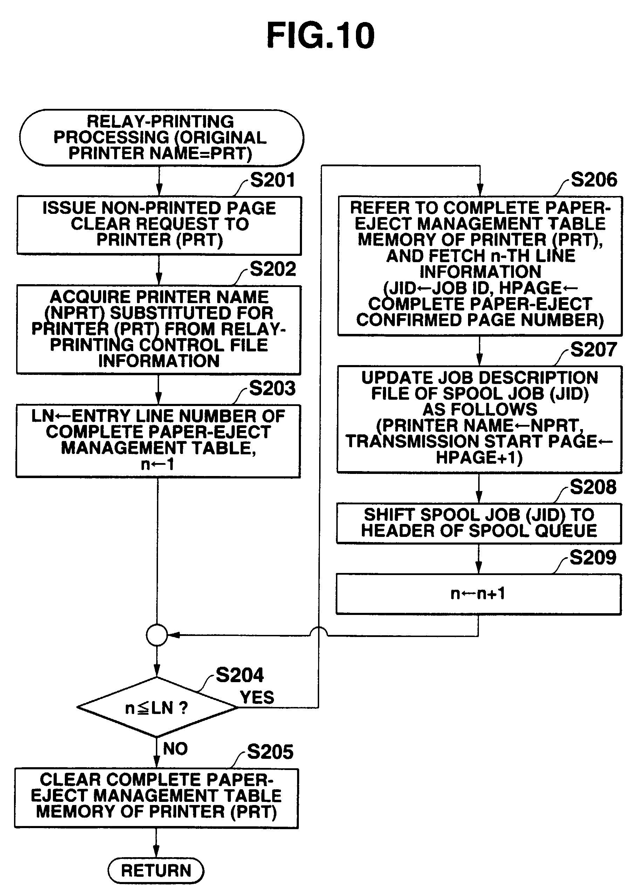

In FIG. 1, the CPU 2 has a print control function of controlling each print operation of N printers connected via the LAN from the LAN port 6. On the basis of a document print processing request instructed when executing an application program stored in the storage medium 8, the spool job description file and the drawing information description file which will be described later, are developed in the RAM 4. Then, according to a description content of each file, the CPU 2 executes a print control processing (see FIG. 8A and FIG. 8B), a complete paper-eject management table updating processing (see FIG. 9) and a relay-printing processing (see FIG. 10), which will be described later.

The application program 201 of FIG. 2 issues a print processing request including drawing information of printing object and print control information to the graphical device interface 202, and then, the drawing information of printing object is data-structured by the graphical device interface 202. Further, a spool job description file and a drawing information storage file are generated by the spool controller 203, and then, a spool job ID is set. When a spool queue of the spool job is stored in the RAM 4, the CPU 2 starts the print control processing.

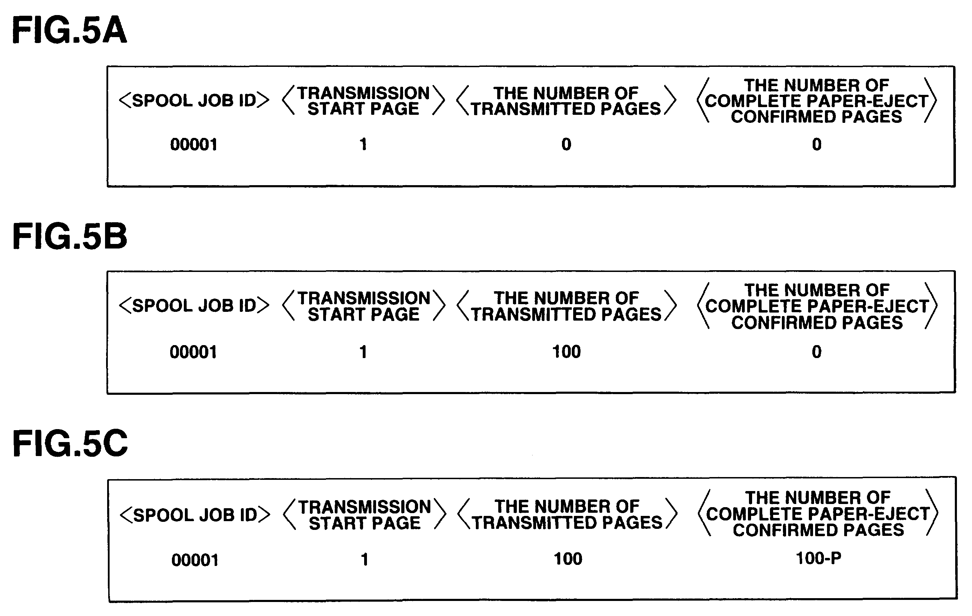

In the print control processing, the CPU 2 first fetches a spool job to be output next from the above spool queue stored in the RAM 4, and then, sets a spool job ID, and further, acquires an output printer name and a transmission-start page from the spool job description file. Next, the CPU 2 determines whether there is the presence of a complete paper-eject non-confirmed job with reference to the contents stored in the complete paper-eject management table (see FIG. 5A to FIG. 5C) relative to the output printer. If there is no complete paper-eject non-confirmed job, the CPU 2 starts the relevant spool job. If there is the complete paper-eject non-confirmed job, the CPU 2 receives information on the number of non-printed pages from the corresponding printer, and then, updates the complete paper-eject management table. If there is a complete ejected spool job in the updated content, the CPU 2 deletes it from the complete paper-eject management table.

In the print control processing, in the case where a printer error is generated in the executing spool job, the CPU 2 executes the complete paper-eject management table updating processing and the relay-printing processing.

In the complete paper-eject management table updating processing, first, the CPU 2 issues a non-printed page number informing request to a printer generating a printer error. When receiving information on the number of non-printed pages from the relevant printer, the CPU 2 calculates the total value of the number of output pages of all entry lines of all spool jobs stored with reference to the complete paper-eject management table (see FIG. 5A to FIG. 5C) of the relevant printer. Next, the CPU 2 sets an entry line number LN in the complete paper-eject management table, and then, acquires a transmission-start page and the number of output pages relative to a spool job of the entry line.

If the number of output pages of the spool job of each acquired entry line is less than the result subtracting the above non-printed page number from the above total value, that is, the number of complete-ejected pages, the CPU 2 determines that the spool job of the relevant entry line is completed. Then, the CPU 2 deletes the relevant entry information from the complete paper-eject management table of the relevant printer, and also, deletes the relevant spool job file. On the other hand, if the number of output pages is a value larger than the number of complete paper-eject confirmed pages, the CPU 2 determines that the spool job of the relevant entry line is not completed. Then, the CPU 2 updates the relevant entry information of the complete paper-eject management table of the relevant printer, and also, updates all of spool job information after the relevant entry line.

Next, the CPU 2 executes the relay-printing processing subsequently to the complete paper-eject management table updating processing. First, the CPU 2 issues a non-printed page clear request to the printer generating an error so that all page information stored in a buffer of the printer generating an error is cleared.

The CPU 2 acquires a printer name substituting for the printer generating an error, and then, sets an entry line number LN stored in a complete paper-eject management table of the substitution printer while setting a parameter "n" for specifying the entry line. If the value "n" is less than the entry line number LN, the CPU 2 acquires a spool job ID of an n-th entry line and the number of complete-ejected pages with reference to the complete paper-eject management table of the printer generating an error. Further, the CPU 2 updates a description content of a spool job description file of the relevant job ID according to the substitution printer name and the number of complete paper-eject confirmed pages so as to shift the relevant spool job ID to the header of spool queue.

On the other hand, if the value "n" is larger than the entry line number LN, the CPU 2 determines that a print processing of all spool job entered in the printer generating an error is completed, and then, clears all entry information of the complete paper-eject management table of the printer generating an error, and thus, the relay-printing processing ends.

Therefore, the CPU 2 has a function as the relay-printing controller 205 of FIG. 2.

The input unit 3 includes a keyboard having a cursor key, a numeric input key, various function keys and the like, and a pointing device such as a mouse and the like, and outputs a depress signal of a key depressed in the keyboard and a mouse position signal to the CPU 2.

In the case where the CPU 2 executes the print control processing, the RAM 4 stores a spool queue including the spool job file defining the spool job description file and the drawing information description file which are shown in FIG. 2, and then, forms the relay-printing control file 204 shown in FIG. 2 and a memory area storing a complete paper-eject management table of each printer.

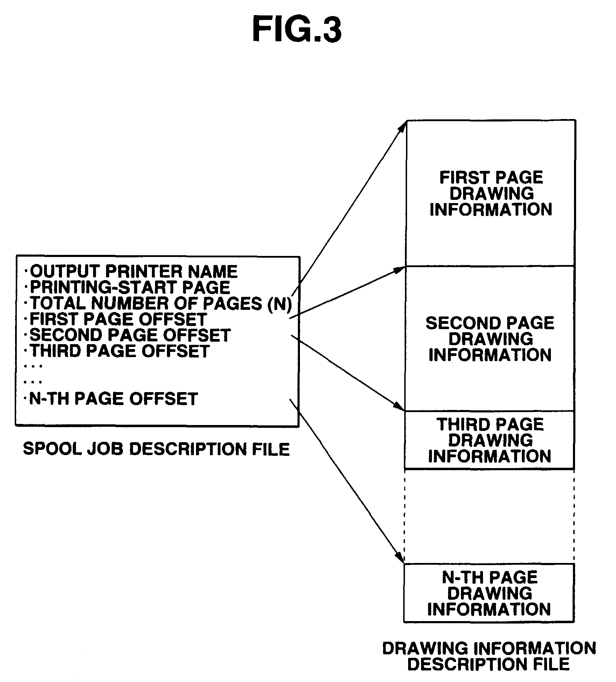

As shown in FIG. 3, the spool job description file is a file describing an output printer name, a transmission-start page, a total number of pages, a first page offset, a second page offset, ···, N-th page offset. Moreover, as shown in FIG. 3, the drawing information description file is a file storing drawing information data-structured correspondingly to each page described in the spool job description file.

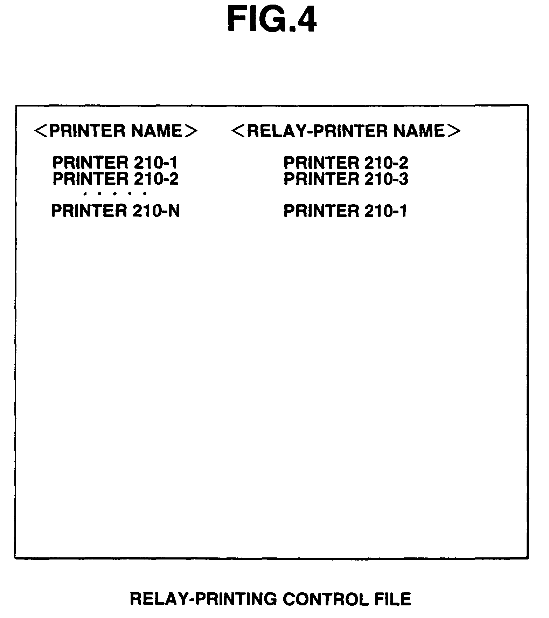

As shown in FIG. 4, the relay-printing control file 204 is a file setting a relay-printer name with respect to each of the printers 210-1 to 210-N shown in FIG. 2.

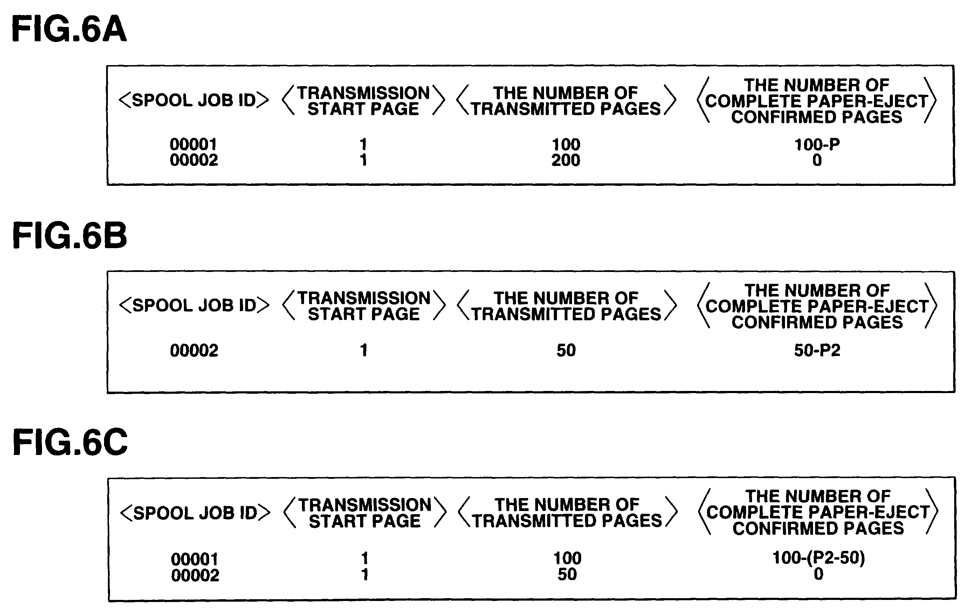

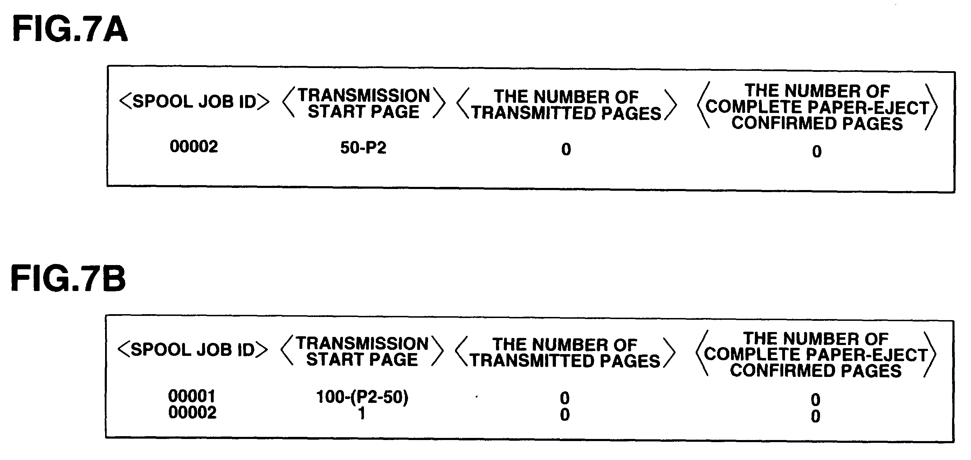

The complete paper-eject management table of each printer is constructed as follows. For example, as shown in FIG. 5A to FIG. 5C, a complete paper-eject management table for the printer 210-1 has the following data such as a spool job ID, a transmission-start page, the number of transmitted pages, and the number of complete-ejected confirmed pages, and these data are stored every spool job entered correspondingly at an entry line unit. Incidentally, a storage content of the complete paper-eject management table for the printer 210-1 shown in FIG. 5A to FIG. 5C and FIG. 6A to FIG. 6C, and a storage content of the complete paper-eject management table for the printer 210-2 shown in FIG. 7A and FIG. 7B, will be described in detail as a concrete print control example in explaining an operation of print control processing described later.

The display unit 5 comprises a CRT (Cathode Ray Tube) and the like, and displays display data input from the CPU 2.

The LAN port 6 is a terminal for receiving and transmitting various control signals relative to the print control processing between N printers 210-1 to 210-N shown in FIG. 2 via the LAN, and receives and transmits various control signals relative to the print control processing between the CPU 2 and the printer drivers 212-1 to 212-N of the printers 210-1 to 210-N.

The storage unit 7 has a storage medium 8 previously storing a program, data and the like, and the storage medium 8 comprises a magnetic, optical storage medium, or a semiconductor memory. The storage medium 8 is fixedly provided to the storage unit 7, or is mounted so as to be freely attached thereto and detached therefrom. Further, the storage medium 8 stores a complete paper-eject management table update processing program, a relay-printing processing program, and data processed in each of the above programs, and the like.

Further, the storage medium 8 may be constructed in a manner of receiving various programs and data stored in the storage medium 8 from other equipments connected via a communication line, and storing them therein. Furthermore, the storage medium 8 may be constructed in a manner of providing a storage unit including the storage medium 8 on other equipments side connected via a communication line, and using various programs and data stored in the storage medium 8 via the communication line.

Next, an operation of this embodiment will be described below.

A print control processing carried out by the CPU 2 will be described based on each flowchart shown in FIG. 8A and FIG 8B.

The application program 201 of FIG. 2 issues a print processing request including drawing information of printing object and print control information to the graphical device interface 202, and then, the drawing information of printing object is data-structured by the graphical device interface 202. Further, a spool job description file and a drawing information storage file are generated by the spool controller 203, and then, a spool job ID is set. When a spool queue of the spool job is stored in the RAM 4, the CPU 2 starts a print control processing.

The CPU 2 fetches a spool job to be output next from the above spool queue stored in the RAM 4, and then, acquires its spool job ID so as to set it in the RAM 4 as JID (step S1). The CPU 2 confirms the presence of a spool job file relevant to the JID in the RAM 4 (step S2). Unless there is the relevant spool job, the CPU 2 carries out a polling surveillance of a queue of the spool queue and a status of a printer having a complete paper-eject non-confirmed job, as an idling processing (step S3).

In the case of acquiring a status of the printer from the host computer 1, the CPU 2 issues a status acquiring request to the printer. When receiving the status acquiring request from the host computer 1, the printer returns any of the following statuses to the host computer 1 as a printer status value. For example, the statuses include a waiting status (that the printer has no non-printed data, and does not carry out a print), a printing status, and an error status (that print is stopping due to an error such as no paper and the like).

Next, the CPU 2 determines whether or not the status value returned from the printer is an error status (step S4). Unless the error status is detected, the CPU 2 returns to step S1; on the other hand, in the case where the error status is detected, the CPU 2 transfers to a complete paper-eject management table updating processing of step S18 (see FIG. 8B).

In step S2, in the case where there is the spool job file relevant to the JID, the CPU 2 reads a spool job description file of the JID from the RAM 4, and then, acquires an output printer name and a transmission-start page, and further, sets the former and the latter as PRT and JSPAGE (step S5). The CPU 2 refers to the complete paper-eject management table of the output printer (step S6), and then, determines the presence of a complete paper-eject non-confirmed job (step S7). Unless there is the complete paper-eject non-confirmed job, the CPU 2 transfers to the processing of step S11; on the other hand, if there is the complete paper-eject non-confirmed job, the CPU 2 issues a non-printed page information acquiring request to the output printer PRT so as to acquire non-printed page information from the output printer, and then, updates a storage content of the complete paper-eject management table of the output printer (step S8).

Sequentially, the CPU 2 determines whether or not a job, in which the number of transmitted pages and the complete paper-eject confirmed pages are the same, exist in the complete paper-eject management table of the output printer (step S9). If such a job exists, the CPU 2 deletes the relevant job from the complete paper-eject management table, and also, deletes the relevant spool job from the queue of the RAM 4 (step S10). Unless the aforesaid job exists, the CPU 2 proceeds to step S11.

In step S11, the CPU 2 additionally stores information on a spool job description file to be processed in this time in the complete paper-eject management table of the output printer. More specifically, the CPU 2 adds the following entry of spool job ID = JID, transmission-start page = JSPAGE, the number of transmitted pages = 0, and the number of complete paper-eject confirmed pages = 0. Sequentially, the CPU 2 sets a parameter for controlling a print processing of this time in the RAM 4 (STPAGE ← transmission-start page, TPAGE ← total number of pages, NPAGE ← STPAGE) (step S12). The CPU 2 determines whether or not the NPAGE is a value smaller than the TPAGE (step S13).

If NPAGE is more than TPAGE, the CPU 2 determines that the print processing of this time (print job) is completed, and then, returns to step S1. On the other hand, if NPAGE is smaller than TPAGE, the CPU 2 reads drawing information of NPAGE from the drawing information storage file (see FIG. 3), and then, outputs the drawing information thus read to the printer driver of the output printer PRT via the LAN port 6 and the LAN (step S14).

The CPU 2 determines whether or not a status value indicative of an error is received from the output printer (step S15). In the case where the CPU 2 receives a waiting status value, the CPU 2 determines that NPAGE print is completed, and then, increments the NPAGE (NPAGE ← NPAGE + 1) (step S16). Thus, the CPU 2 updates the number of transmitted pages of the complete paper-eject management table of the output printer to NPAGE which has been updated in step S16 (step S17), and then, returns to step S13.

The above processing of steps S13 to Step S17 are repeatedly executed, and thereby, a print operation based on the spool job description file relative to the print processing of this time is carried out with respect to the output printer PRT.

In step S15, in the case where the CPU 2 receives a status value indicative of an error, the CPU 2 executes a complete paper-eject management table updating processing in step S18, and subsequently, executes a relay-printing processing in step S19.

The above complete paper-eject management table updating processing (step S18) executed by the CPU 2 will be described below with reference to the flowchart shown in FIG. 9.

In FIG. 9, first, the CPU 2 issues a non-printed page number informing request to the output printer PRT generating a print error (step S101), and then, receives the number of non-printed page information P2 from the output printer (step S102). The CPU 2 refers to the complete paper-eject management table of the output printer, and then, finds the total number of pages APAGE of the number of transmitted pages of all entry lines of the stored all spool jobs (step S103). The CPU 2 sets the number LN of entry lines of the complete paper-eject management table of the output printer (step S104).

Sequentially, the CPU 2 determines whether or not the number LN of entry lines is equal to or more than 1 (step S105). Unless the number LN of entry lines is equal to or more than 1, namely, if the number of entry lines is 0, the CPU 2 finishes this processing, and then, transfers to a relay-printing processing. On the other hand, if the number LN of entry lines is equal to or more than 1, the CPU 2 refers to the complete paper-eject management table of the output printer, and then, acquires first entry information, and further, sets a parameter for controlling a relay-printing processing in the RAM 4 from the acquired information (sets a job ID as JID, sets a transmission-start page as STPAGE, and sets the number of transmitted pages as EPAGE) (step S106)

The CPU 2 determines whether or not the EPAGE is equal to or less than the subtraction result APAGE - P2 subtracting the number of non-printed pages P2 from APAGE, that is, the number of complete paper-eject confirmed pages (step S107). In the case where the EPAGE is equal to or less than the APAGE - P2, the CPU 2 determines that the spool job entered in the first line is completed, and then, deletes the first line entry information from the complete paper-eject management table of the relevant output printer PRT while deleting the relevant JID spool job file from the RAM 4 (step S108).

Sequentially, the CPU 2 decrements the entry line number LN by only one because one entry line is deleted (step S109), and then, returns to a processing for determining the entry line number LN of step S105. If EPAGE is a value larger than APAGE - P2, the CPU 2 determines that the spool job of the relevant entry line is not completed, and then, proceeds to step S110. Then, the CPU 2 updates the number of complete paper-eject confirmed pages of the first line entry information to APAGE - P2 in the complete paper-eject management table of the relevant output printer PRT.

The CPU 2 updates all of the number of complete paper-eject confirmed pages of the entry information after the second entry line to zero "0" in the complete paper-eject management table of the relevant output printer PRT (step S111), and then, finishes this processing, and thereafter, transfers to a relay-printing processing.

Next, a relay-printing processing (step S19) executed by the CPU 2 will be described below with reference to the flowchart shown in FIG. 10.

In FIG. 10, first, the CPU 2 issues a non-printed page clear request to the output printer PRT generating an error (step S201), and thereby, the printer generating an error clears drawing information of all pages stored in the buffer built in the printer. Then, the CPU 2 acquires a printer (relay-printer) name (NPRT) substituted for the printer generating an error from the relay-printing control file 204 (step S202). Further, the CPU 2 sets an entry line number of a complete paper-eject management table of the substitution printer to LN, and also, sets a parameter "n" for specifying the entry line to 1 (step S203).

Sequentially, the CPU 2 determines whether or not "n" is equal to or less than the entry line number LN (step S204). If "n" is equal to or less than the entry line number LN, the CPU 2 refers to the complete paper-eject management table of the output printer PRT, and then, acquires an n-th line information, and further, sets a parameter for controlling a relay-printing processing of this time in the RAM 4 from the information thus acquired (sets a job ID as JID, and sets the number of complete paper-eject confirmed pages as HPAGE) (step S207).

The CPU 2 updates a description content of the spool job description file of the relevant job ID (printer name ← NPRT, transmission-start page ← HPAGE + 1) (step S207), and then, shifts the relevant spool job ID "JID" to the header of the spool queue (step S208).

Sequentially, the CPU 2 adds 1 to "n" (step S209), and then, returns to the processing of step S204. If "n" is equal to or less than the entry line number LN, the CPU 2 repeatedly executes the processing of step S206 to step S209, and then, makes the substitution printer print the non-printed spool job in the printer generating an error. In this case, the CPU 2 gives the substitution printer instructions to regard a page generating an error as a transmission-start page.

In step S204, if "n" is larger than the entry line number LN, the CPU 2 determines that the non-printed processing of all spool jobs entered in the printer generating an error is completed. Then, the CPU 2 clears all entry information of the complete paper-eject management table of the printer generating an error (step S205), and finishes this relay-printing processing, and thereafter, returns to step S1 of FIG. 8A.

Next, a detail of the print control processing executed by the CPU 2 will be described below with reference to the functional block shown in FIG. 2 and the storage content of the complete paper-eject management table for the printer 201-1 and the printer 201-2 shown in FIG. 5A to FIG. 5C, FIG. 6A to FIG. 6C, and FIG. 7A and FIG. 7B.

As shown in FIG. 2, if the first spool job is a spool job to be processed next, the relay-printing controller 205 (CPU 2) first reads the first spool job description file so as to recognize an output printer name. In the first spool job, the spool job ID is 00001, the transmission-start page is 1, the output printer name is the printer 201-1, the total number of pages is 100 pages.

The relay-printing controller 205 stores the following data, that is, spool job ID = 00001, transmission-start page = 1, the number of transmitted pages = 0, in the complete paper-eject management table of the printer 201-1, before starting a processing for outputting drawing information to the printer driver 212-1 of the printer 201-1, and then, sets a status value as shown in FIG. 5A. The relay-printing controller 205 fetches drawing information in succession from the first page drawing information at a page unit, and then, output the drawing information to the printer driver 212-1 in succession.

The drawing information is a format which does not depend upon a printer type; therefore, the drawing information is converted into a command format (ESC sequence) peculiar to the printer 201-1 by the printer driver 212-1, and then, is output to the printer 201-1 via the port driver 214-1.

Every when outputting drawing information of each page to the printer driver 212-1, the relay-printing controller 205 counts up the number of transmitted pages of the complete paper-eject management table of the printer 201-1.

The relay-printing controller 205, the printer driver 212-1 and the port driver 214-1 repeats the above processing with respect to all pages of the first spool job. At the point of time when the relay-printing controller 205 outputs the drawing information of all pages to the printer driver 212-1, the complete paper-eject management table for the printer 201-1 is set as shown in FIG. 5B.

In this case, printing of all the pages of the application program 201 is completed in the middle of processing the first spool job, and a second spool job exists in the spool queue of FIG. 2 as the next queue.

When recognizing the second spool job, the relay-printing controller 205 reads a spool job description file 2 so as to recognize an output printer name. In the second spool job, the spool ID is 00002, the transmission-start page is 1, the output printer name is the printer 201-1, and the total number of pages is 200 page.

When referring to the complete paper-eject management table for the printer 201-1, and then, recognizing that a spool job of a complete paper-eject non-confirmed spool job ID 00001 exists in the printer 201-1, the relay-printing controller 205 gives the printer 201-1 instructions to inquire a non-printed data page number via the port driver 214-1. As the inquiring means, there has been shown the case where a connection between the host computer 1 and the printer 201-1 is a LAN connection. A Centronics interface connection, a USB connection, and other connection forms may be employed, and the means may be any other form so long as it is confined to a protocol means regulated by the connection form.

When receiving a request for inquiring the number of non-printed pages, the printer 201-1 outputs the number of non-printed pages to the host computer 1 by the above protocol means. If the number of non-printed page information received from the printer 201-1 is 0, the relay-printing controller 205 previously deletes the spool job file of the output first spool job, and then, deletes the second spool job information from the complete paper-eject management table for the printer 201-1, and further, deletes the file of the first spool job (first spool job description file and the first drawing information description file).

If the above number of non-printed pages P is equal to or more than 0, the relay-printing controller 205 sets the number of complete paper-eject confirmed pages of the spool job ID 00001 of the complete paper-eject management table for the printer 201-1 to the number of transmitted pages-P, that is, 100-P, and thus, the complete paper-eject management table for the printer 201-1 is set as shown in FIG. 5C.

Thereafter, in the same manner as the above output of the first spool job, a processing for outputting the second spool job is executed between the relay-printing controller 205 and the printer driver 212-1, and then, when the output processing of the second spool job is completed, the complete paper-eject management table for the printer 201-1 is set as shown in FIG. 6A.

The relay-printing controller 205 has means for recognizing an error of the printer 201-1 in the following cases; more specifically, the case where an error is detected during spool job output, that is, the case where an error is transmitted in the following order of the port driver 214-1 → the printer driver 212-1 → the relay-printing controller 205, and the case where all pages are output, and thereafter, an error is detected during idling processing when there is no job to be output next.

The relay-printing controller 205 makes a polling surveillance of a queue of the spool queue and a status of the printer having a complete paper non-confirmed job during idling processing. Further, the relay-printing controller 205 issues a status acquiring request to the printer 201-1, and then, receives the following status values, that is, a waiting state (that there is no non-printed data, and also, print is not carried out), a printing state, an error state (that print is stopped due to an error such as no paper and the like).

When detecting an error of the printer 201-1 at the above two timings, the relay-printing controller 205 executes the complete paper-eject management table updating processing.

When making an inquiry about the number of non-printed pages with respect to the printer 201-1, and recognizing a pending non-printed page number P2 stored in the buffer of the printer 201-1, the relay-printing controller 205 controls the complete paper-eject management table for the printer 201-1 as follows.

In FIG. 2, in the case where the relay-printing controller 205 detects an error when the printer 201-1 outputs drawing data of page 51 of the second spool job, if the number of non-printed page information P2 of the printer 201-1 is P2 ≦ 50, the storage content of the complete paper-eject management table for the printer 201-1 is set as shown in FIG. 6B. On the other hand, if the P2 is P2 > 50, the storage content of the same is set as shown in FIG. 6.

In this case, the drawing information of outputting page 51 is in a page frame incomplete status in the printer 201-1; for this reason, this page 51 is not counted as one page.

Sequentially, the relay-printing controller 205 recognizes an error generated in the printer 201-1, and then, executes the above relay-printing processing because a complete paper-eject non-confirmed job exists in the printer 201-1.

An error is generated in the printer 201-1; for this reason, the relay-printing controller 205 recognizes the printer 201-2, which is a relay (substituted) printer of the printer 201-1, according to the content of the previously read relay-printing control file 204, and then, executes a job output processing with respect to the printer 201-2.

In this case, if the number of non-printed page information P2 is P2 ≦ 50 (FIG. 6B), the relay-printing controller 205 starts an output processing to the printer 201-2 from the drawing information of 50 - P2 page which is the number of complete-ejected pages of the second spool job.

Further, in this case, the spool job ID 00002 and the transmission-start page 50 - P2 are stored in the complete paper-eject management table for the printer 201-2.

In the case where the number of non-printed page information P2 is P2 ≦ 50 (FIG. 6B), the complete paper-eject management table for the printer 201-2 is set as shown in FIG. 7A; on the other hand, in the case where P2 > 50, the complete paper-eject management table for the printer 201-2 is set as shown in FIG. 7B.

As described above, in the print system of this embodiment, a paper ejection is not confirmed for each page, but the paper ejection is confirmed before the next spool job is output and in the case where a printer error is generated. Therefore, it is possible to effectively perform a relay-printing processing without deteriorating print performance of printer.

The relay-printing processing is executed from a page next to the page determined as complete paper-eject; therefore, it is possible to prevent a printing page from being skipped when a power of the printer is turned off during a printer error.

Sequentially, when detecting an error of the printer 201-1, the relay-printing controller 205 issues an internal data clear request of the data stored in the buffer to the printer 201-1. When receiving the internal data clear request, the printer 201-1 deletes drawing information of all pages stored in the buffer of the printer.

The relay-printing controller 205 refers to information of the relay-printing control file 204 read in the start-up, and then, acquires a printer 201-2 which is a printer name substituted for the printer 201-1. Then, the relay-printing controller 205 reads a storage content of the complete paper-eject management table for the printer 201-1, and then, rewrites a job description file of all spool jobs of the entry line, and further, shifts it to the header of the spool queue.

Thereafter, when the relay-printing controller 205 fetches the header job of the spool queue, the spool job relayed to the printer 201-2 is fetched, and thereby, the drawing information of the page generating an error in the printer 201-1 is again output to the printer 201-2.

As is evident from the above description, in the print system of this embodiment, all page information stored in the buffer of the printer generating an error is cleared, and then, is relayed and output to the substitution printer from a page next to the complete ejection page. Therefore, it is possible to prevent an overlap print of the same page in a relay-printing, and a page from being skipped, and thus, improve an availability and reliability of the print system.

## Claims

1. A print control apparatus which carries out an output control of print data with respect to a plurality of printers, characterized by comprising:
transmission means (S1) for transmitting print data of plural pages included in a plurality of print request jobs requested by a user to at least one of the plurality of printers, and for managing a print output status of the transmitted print data for each of the plurality print request jobs;
updating means (S18) for acquiring a print output status of the printer, and for updating the print output status of the transmitted print data managed for each of the print request jobs based on the print output status of the printer;
detecting means (S103) for detecting a print request job having an interrupted print output and an interrupted page based on the print output status of the transmitted print data managed for each of the print request jobs when a printing operation of one of the plurality of printers is interrupted by a generation of an error; and
restart means (S19) for again transmitting print data from the interrupted page of the print request job having the interrupted print output to a printer having no error.

2. The print control apparatus according to claim 1, characterized by further comprising clear means (S205) for clearing print data stored in a buffer of a printer whose printing operation is interrupted.

3. The print control apparatus according to claim 1, characterized in that said restart means selects another printer having no error, and again transmits the print data from the interrupted page of the print request job having the interrupted print output to the selected other printer having no error.

4. The print control apparatus according to claim 2, characterized in that said restart means selects another printer having no error, and again transmits the print data from the interrupted page of the print request job having the interrupted print output to the selected other printer having no error.

5. The print control apparatus according to claim 1, characterized in that said transmission means manages the number of transmitted page information and print completion page information for each of the print request jobs, and
said updating means acquires the number of non-printed pages temporarily stored in a buffer memory of the printer, and updates the print completion page information for each of the print request jobs based on the number of non-printed pages, the number of transmitted pages and the print completion page information.

6. The print control apparatus according to claim 1, characterized in that said updating means acquires a print output status of the printer when an error is generated and when the print request job is processed, and updates the print output status for each of the print request jobs.

7. A print control apparatus which carries out an output control of print data output with respect to a plurality of printers connected to a network, the apparatus characterized by comprising:
transmission means (S1) for transmitting print data of plural pages included in a plurality of print request jobs requested by a user to at least one of the plurality of printers;
detecting means (S18) for detecting a print request job having an interrupted print output and an interrupted page in the print request job of print data transmitted to the printer when a printing operation of the printer is interrupted by a generation of an error; and
restart means (S19) for selecting another printer which is connected to the network and has no error, and for again transmitting print data from the interrupted page of the print request job having the interrupted print output to the selected other printer.

8. An article of manufacture comprising a computer usable medium having computer readable program code means embodied therein, the computer readable program code means comprising:
computer readable program code means for causing a computer to transmit print data of plural pages included in a plurality of print request jobs requested by a user to at least one of the plurality of printers, and manage a print output status of the transmitted print data for each of the plurality print request jobs;
computer readable program code means for causing a computer to acquire a print output status of the printer, and update the print output status of the transmitted print data managed for each of the print request jobs based on the print output status of the printer;
computer readable program code means for causing a computer to detect a print request job having an interrupted print output and an interrupted page based on the print output status of the transmitted print data managed for each of the print request jobs when a printing operation of one of the plurality of printers is interrupted by a generation of an error; and
computer readable program code means for causing a computer to again transmit print data from the interrupted page of the print request job having the interrupted print output to a printer having no error.

9. An article of manufacture comprising a computer usable medium having computer readable program code means embodied therein, the computer readable program code means comprising:
computer readable program code means for causing a computer to transmit print data of plural pages included in a plurality of print request jobs requested by a user to at least one of the plurality of printers;
computer readable program code means for causing a computer to detect a print request job having an interrupted print output and an interrupted page in the print request job of print data transmitted to the printer when a printing operation of the printer is interrupted by a generation of an error; and
computer readable program code means for causing a computer to select another printer which is connected to the network and has no error, and again transmit print data from the interrupted page of the print request job having the interrupted print output to the selected other printer.
